# EUROPEAN PATENT APPLICATION

(11) **EP 4 567 494 A1**
(43) Date of publication of application: **11.06.2025**
(21) Application number: 24213955.8
(22) Date of filing: 19.11.2024
(51) Int. Cl.: G02B 27/00, G02B 27/01

(54) **LIGHT GUIDING APPARATUS**

(30) Priority: 08.12.2023 GB 202318762
(71) Applicant: Nokia Technologies Oy, 02610 Espoo (FI)
(72) Inventor: JÄRVENPÄÄ, Toni Johan, Akaa (FI)
(74) Representative: Nokia EPO representatives

(57) **Abstract**

Examples of the disclosure relate to light guiding apparatus comprising diffractive optics. The apparatus comprises a light guiding member comprising a stack of layers and multiple interfaces between respective layers. The respective layers are arranged to enable light to be guided through the light guiding member via internal reflections. The apparatus also comprises in-coupling diffractive means configured to in-couple one or more input beams of light into the first layer of the light guiding member and out-coupling diffractive means configured to out-couple the one or more beams of light from the light guiding member. The in-coupling diffractive means and the out-coupling diffractive means are provided on the first layer of the light guiding member. The light guiding member comprises more than three layers and the refractive index of at least one of; the respective layers or the respective interfaces, decreases from the first layer through the stack of layers.

## Description

### TECHNOLOGICAL FIELD

Examples of the disclosure relate to light guiding apparatus. Some relate to light guiding apparatus comprising diffractive optics.

### BACKGROUND

Light guiding apparatus comprising diffractive optics can be used in devices such as mediated headsets or vehicular displays. Colour uniformity can be problematic in such devices.

### BRIEF SUMMARY

According to various, but not necessarily all, examples of the disclosure there is provided an apparatus comprising:
a light guiding member comprising a stack of layers and multiple interfaces between respective layers, wherein the respective layers are arranged to enable light to be guided through the light guiding member via internal reflections;
in-coupling diffractive means configured to in-couple one or more input beams of light into the first layer of the light guiding member;
out-coupling diffractive means configured to out-couple the one or more beams of light from the light guiding member wherein the in-coupling diffractive means and the out-coupling diffractive means are provided on the first layer of the light guiding member; and
wherein the light guiding member comprises more than three layers and the refractive index of at least one of; the respective layers or the respective interfaces, decreases from the first layer through the stack of layers.

The refractive index of the at least one of; the respective layers or the respective interfaces, may decrease gradually from the first layer through the stack of layers.

The decrements of the refractive indices can be determined, at least in part, by a number of layers and interfaces in the light guiding member.

The layers and interfaces can be configured so that light having a first wavelength and having a first angle of incidence travels through a first layer and light having the first wavelength and a second angle of incidence travels through a second layer.

The light guiding member can comprise five layers and four interfaces.

A thin film material can be provided at the interfaces.

The interfaces can comprise a thin film and the thin film material is different for different interfaces.

Different materials can be used for different layers of the stack.

Different layers in the stack can have different thicknesses.

The first layer can be thicker than other layers in the stack.

The light guiding member may be substantially planar.

The interfaces between respective layers of the light guiding member may be substantially planar.

According to various, but not necessarily all, examples of the disclosure there may be provided a module, a device, a headset, a vehicle or cab for a vehicle comprising an apparatus as described herein.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings
FIGS. 1A to 1F show an apparatus and input beams with different angles of incidence;
FIGS. 2A to 2D show an apparatus and input beams with different angles of incidence;
FIG. 3 shows an apparatus according to examples of the disclosure;
FIG. 4 shows an apparatus;
FIGS. 5A to 5F show an apparatus and input beams with different angles of incidence; and
FIG. 6 shows brightness levels for an output of an apparatus.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

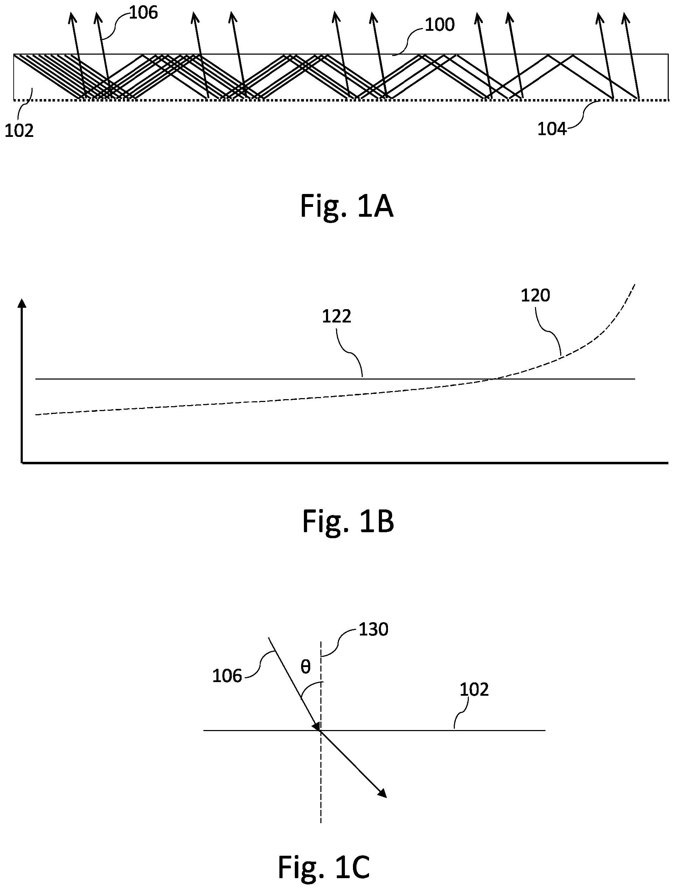

Light guiding apparatus comprising diffractive optics can be used in devices such as mediated headsets or vehicular displays. Colour uniformity can be problematic in such devices. The path of light through such apparatus can be dependent on the angle of incidence of the light on an in-coupling diffractive means. Figs. 1A to 1F show how different angles of incidence on the in-coupling diffractive means can affect the brightness of an output of such apparatus.

Fig. 1A shows an example apparatus 100. The apparatus 100 comprises a light guiding member 102. The light guiding member 102 is arranged to enable light to be guided through the light guiding member 102 via internal reflections. The apparatus 100 also comprises an out-coupling diffractive means 104. The out-coupling diffractive means 104 is configured to out-couple beams of light from the light guiding member 102. A beam of green light 106 is shown passing through the apparatus 100 in Fig. 1A.

In the example of Fig. 1A the out-coupling diffractive means 104 is arranged to provide uniform, or substantially uniform, brightness for the output light across the out-coupling diffractive means 104. To achieve this uniform, or substantially uniform, brightness the out-coupling efficiency of the out-coupling diffractive means 104 increases along the path of the beam of the light as it travels through the light guiding member 102. In the example of Fig. 1A the out-coupling efficiency of the out-coupling diffractive means 104 increases from left to right. The power of the remaining light inside the light guiding member 102 reduces as parts of the light are outcoupled. Therefore, to maintain an even level of brightness the efficiency of the out-coupling diffractive means 104 increases.

The increase in the efficiency of the out-coupling diffractive means 104 can be achieved by modulating the grating depth or changing any other suitable parameters of the out-coupling diffractive means 104 such as changing the grating fill factor or changing the grating profile.

In Fig. 1A the increase in the efficiency of the out-coupling diffractive means 104 is optimized for green light. A beam of green light 106 is shown in Fig. 1A. Fig. 1B shows a plot 120 of the efficiency of the out-coupling diffractive means 104 for green light across the out-coupling diffractive means 104. This plot 120 shows that the efficiency increases from left to right. The efficiency of the out-coupling diffractive means 104 can be optimized for other wavelengths of light in other examples.

The angle of incidence of the beam on the apparatus 100 will affect the optical path of the beam through the apparatus 100. The efficiency of the out-coupling diffractive means 104 can also be optimized for an angle of incidence for the beam of green light 106. In this example the angle of incidence of the beam on the apparatus 100 for which the out-coupling diffractive means 104 is optimized could be 10°.

Fig. 1C indicates an angle of incidence θ. This is the angle θ at which the beam of light 106 is encountering and exiting the apparatus 100. This angle is measured from the normal 130. The normal 130 is an axis that extends perpendicularly from the surface of the light guiding member 102.

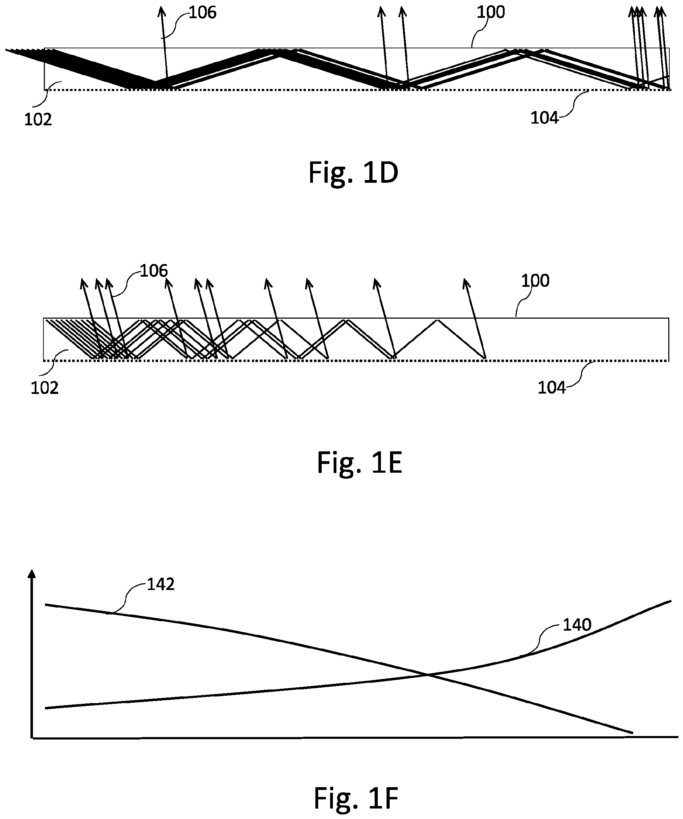

Figs. 1D and 1E show the apparatus of Fig. 1A but with a beam of green light 106 having different angles of incidence. In the example of Fig. 1D the beam of green light 106 has an angle of incidence of 5° and in the example of Fig. 1E the beam of green light 106 has an angle of incidence of 15°.

These angles could represent edges of an image. For example, if a beam of light represents an image, then a ray from the center of the image could have an angle of incidence of 10° while rays from the edges of the image could have angles of incidence of 5° and 15°.

The different angles of incidence result in different optical paths through the light guiding member 102. This results in different total internal reflection angles and different total internal reflection lengths for the light even though it has the same wavelength. The total internal reflection length is the distance between consecutive total internal reflections on one surface of the light guiding member 102.

Fig. 1D shows that the light that has the smaller angle of incidence, in this case 5° undergoes fewer internal reflections and has longer total internal reflection length and therefore outcouples later than the light shown in Fig. 1A. Fig. 1E shows that the light that has the larger angle of incidence, in this case 15°, undergoes more internal reflections and has shorter total internal reflection length and therefore outcouples sooner than the light shown in Fig. 1A.

This results in uneven brightness for the output of the apparatus 100.

Fig. 1F shows plots of the output brightness for the different angles of incidence. A first plot 140 shows the brightness of the light that had an angle of incidence of 5°. This plot 140 shows that the brightness is not uniform. The brightness of the out-coupled light increases from left to right because the light that had an angle of incidence of 5° out-couples later. A second plot 142 shows the brightness of the light that had an angle of incidence of 15°. This plot 142 also shows that the brightness is not uniform. The brightness of the out-coupled light decreases from left to right because the light that had an angle of incidence of 15° out-couples sooner.

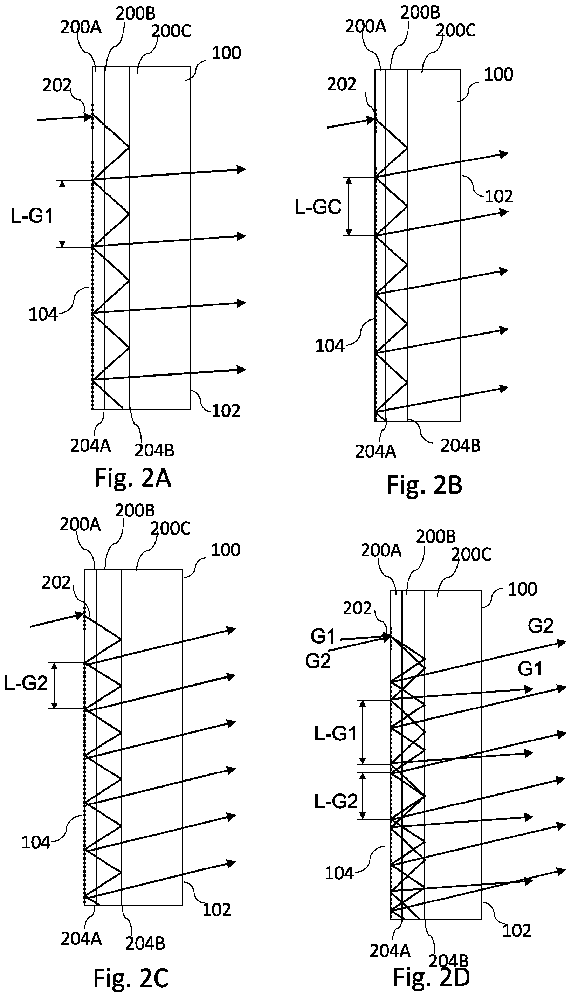

Figs. 2A to 2D show an apparatus 100 and total internal reflection length differences for different angles of incidence. In this example the apparatus 100 comprises a light guiding member 102. The light guiding member 102 comprises three layers 200. The light guiding member 102 comprises a first layer 200A, a second layer 200B, and a third layer 200C.

An in-coupling diffractive means 202 and an-outcoupling diffractive means 104 are provided on the first layer 200A.

The apparatus 100 also comprises interfaces 204 between the respective layers 200 of the light guiding member 102.

The apparatus comprises a first interface 204A between the first layer 200A and the second layer 200B. The first interface 204A is configured to reflect light having a first wavelength and reflection angle and allow light having a second and third wavelength and reflection angle to pass through. In the example of Figs. 2A to 2D the first interface 204A would reflect red light but allow blue and green light to pass through. The apparatus also comprises a second interface 204B between the second layer 200B and the third layer 200C wherein the second interface 204B is configured to reflect light having a second wavelength and reflection angle and allow light having the third wavelength and reflection angle to pass through. In the example of Figs. 2A to 2D the second interface 204B would reflect green light but allow blue light to pass through.

Fig. 2A shows the path for a beam that encounters the apparatus 100 with a first angle of incidence G1. The first angle of incidence G1 can be 5°. The total internal reflection length L-G1 is indicated in Fig. 2A.

Fig. 2B shows the path for a beam that encounters the apparatus 100 with a central angle of incidence GC. The central angle of incidence GC can be 10°. The total internal reflection length L-GC is indicated in Fig. 2B. The total internal reflection length L-GC is shorter than the total internal reflection length L-G1. This means that the beam that enters the apparatus 100 with a central angle of incidence GC undergoes more internal reflections within the apparatus than a beam that enters the apparatus 100 with a first angle of incidence G1.

Fig. 2C shows the path for a beam that enters the apparatus 100 with a second angle of incidence G2. The second angle of incidence G2 can be 15°. The total internal reflection length L-G2 is indicated in Fig. 2C. The total internal reflection length L-G2 is shorter than the total internal reflection length L-GC. This means that the beam that enters the apparatus 100 with a second angle of incidence GC undergoes more internal reflections within the apparatus than a beam that enters the apparatus 100 with a first angle of incidence G1 and a beam that enters the apparatus 100 with a central angle of incidence GC.

Fig. 2D shows the path for the beams L-G1 and L-G2 for comparison. This shows that the output is not uniform for light having the same wavelength.

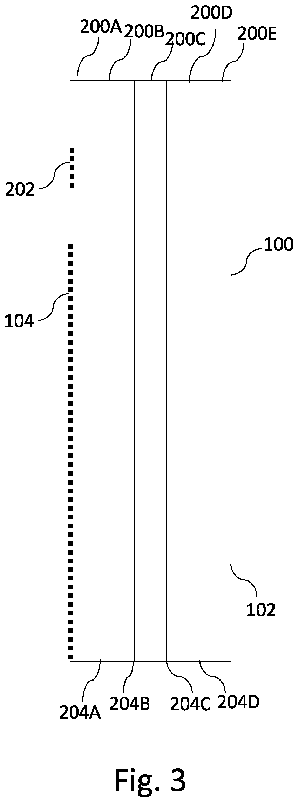

Fig. 3 shows an apparatus 100 according to examples of the disclosure. The apparatus 100 is arranged to improve the uniformity of the brightness of the out-coupled light of different angles of incidence. The structure of the apparatus 100 takes into account that light with different angles of incidence takes different paths through the light guiding member 102. The apparatus 100 can also be configured to take into account that light of different wavelengths out-couples from the out-coupling diffractive means 104 with different efficiencies.

The apparatus 100 comprises a light guiding member 102 comprising a stack of layers 200. The stack of layers 200 comprises multiple layers 200 and multiple interfaces 204 between respective layers 200. In the example of Fig. 3 the light guiding member 102 comprises five layers 200. The light guiding member 102 comprises a first layer 200A, a second layer 200B, a third layer 200C, a fourth layer 200D, and a fifth layer 200E. The light guiding member 102 can comprise other numbers of layers 200 in other examples.

In the example of Fig. 3 the light guiding member 102 comprises four interfaces 204. The light guiding member 102 comprises a first interface 204A, a second interface 204B, a third interface 204C, and a fourth interface 204D. The light guiding member 102 can comprise other numbers of layers 200 in other examples.

The respective layers 200 of the light guiding member 102 are arranged to enable light to be guided through the light guiding member 102 via internal reflections.

The light guiding member 102 can be substantially planar. The respective layers 200 within the light guiding member 102 can be planar or substantially planar. The interfaces 204 between respective layers of the light guiding member 102 can be planar or substantially planar.

The apparatus 100 also comprises an in-coupling diffractive means 202. The in-coupling diffractive means 202 is configured to in-couple one or more input beams of light into the first layer 200A of the light guiding member 102.

The apparatus 100 also comprises an out-coupling diffractive means 104. The out-coupling diffractive means 104 is configured to out-couple the one or more beams of light from the light guiding member 102. The in-coupling diffractive means 202 and the out-coupling diffractive means 104 are provided on the first layer 200A of the light guiding member 102.

The out-coupling diffractive means 104 can have different efficiencies for different wavelengths and internal reflection angles of light.

The diffractive means that are used for the in-coupling diffractive means 202 and the out-coupling diffractive means 104 can comprise any means that can be configured to diffract the input beams of light. The diffractive means can comprise any one or more of a diffractive optical element, diffractive structure, diffraction gratings, holographic gratings, Bragg gratings, rulings, ridges, surface relief diffractive gratings or any suitable optical component or feature having a periodic structure that splits and diffracts light into several beams travelling in different directions.

In examples of the disclosure the light guiding member 102 comprises more than three layers 200 and the refractive index of at least one of; the respective layers 200 or the respective interfaces 204, decreases from the first layer 200A through the stack of layers.

In the example of Fig. 3 the light guiding member 102 comprises five layers 200 and four interfaces 204. Other numbers of layers 200 and interfaces 204 could be used in other examples, such as six layers 200 and five interfaces 204. In the example of Fig. 3 the light guiding member 102 comprises a first layer 200A, a second layer 200B, a third layer 200C, a fourth layer 200D and a fifth layer 200E. The light guiding member comprises a first interface 204A, a second interface 204B, a third interface 204C and a fourth interface 204D. The first interface 204A is provided between the first layer 200A and the second layer 200B. The second interface 204B is provided between the second layer 200B and the third layer 200C. The third interface 204C is provided between the third layer 200C and the fourth layer 200D. The fourth interface 204D is provided between the fourth layer 200D and the fifth layer 200E.

The layers 200 and interfaces 204 can be configured so that light of different wavelengths and/or different angles of incidence are reflected at different interfaces 204. For example, the layers 200 and interfaces 204 can be arranged so that light having a first wavelength and having a first angle of incidence travels through a first layer 200A and light having the first wavelength and a second angle of incidence travels through a second layer 200B. The light having the first wavelength and the first angle of incidence remains in the first layer 200A and would not pass from the first layer 200A to the second layer 200B. The light having the second wavelength and the second angle of incidence does pass from the first layer 200A to the second layer 200B and therefore remains in the first layer 200A and the second layer 200B.

The refractive indices of the components of the apparatus 100 can decrease through the stack. In some examples the refractive indices of the interfaces 204 can decrease through the stack. In some examples the refractive indices of the layers 200 can decrease through the stack. In some examples the refractive indices of both the interfaces 204 and the layers 200 can decrease through the stack.

The refractive indices can decrease gradually through the stack. The decrements of the refractive indices can be determined by factors such as the number of layers 200 and interfaces 204 in the light guiding member 102 or any other suitable factor. For example, an apparatus 100 with more layers 200 in the light guiding member 102 could have smaller decrements in the refractive indices than an apparatus with fewer layers 200 in the light guiding member 102.

In some examples the layers 200 can be made of the same material. In such examples the layers 200 would have the same refractive index. In some examples the layers 200 can be made of different materials. In such examples the layers 200 could have different refractive indices. In some examples there could be one or more layers that have the same material and the same refractive index and one or more layers that have different materials and different refractive indices.

The use of different material for different layers 200 can also enable different optical properties to be provided. The different optical properties could be absorption and scattering properties and/or any other properties. For example, the last layer 200 in the stack could be selected to have low absorption of blue light. This can increase the brightness levels of the output.

In some examples a thin film material is provided at the interfaces 204. The thin film material can be different for different interfaces. This can enable the different refractive indices to be obtained.

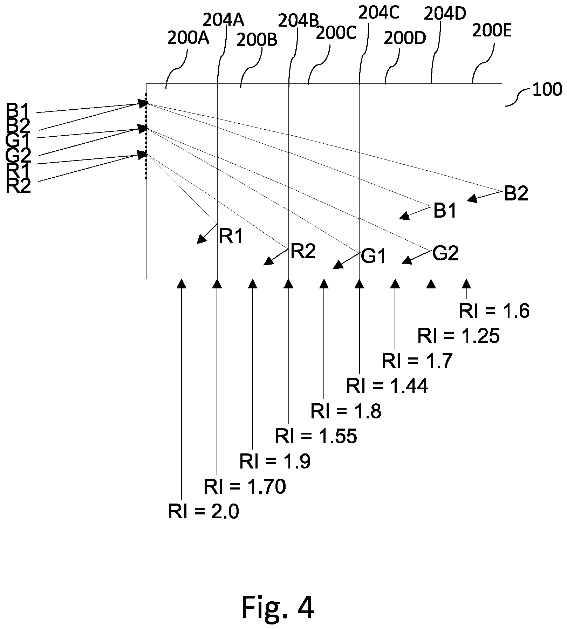

Fig. 4 shows a section of the apparatus 100 and the respective refractive indices that could be used in examples of the disclosure.

In this example the refractive indices of the interfaces 204 are lower than the refractive indices of the layers 200 that are adjacent to the interface.

In this example both the refractive indices of the layers 200 and the refractive indices of the interfaces 204 decreases through the stack in the light guiding member 102. In the example of Fig. 4 the refractive indices of the layers 200 decrease in regular decrements. That is, the change in the refractive index is the same between each pair of consecutive layers 200. In the example of Fig. 4 the refractive index decreases by 0.1 for each layer 200.

In the example of Fig. 4 the refractive indices of the interfaces 204 decrease in irregular decrements. That is, the change in the refractive index is different between consecutive interfaces 204. In the example of Fig. 4 the refractive index decreases by between 0.11 and 0.19 for each different interfaces 204.

In the example of Fig. 4 the first layer 200A has a refractive index of 2.0, the first interface 204A has a refractive index of 1.70, the second layer 200B has a refractive index of 1.9, the second interface 204B has a refractive index of 1.55, the third layer 200C has a refractive index of 1.8, the third interface 204C has a refractive index of 1.44, the fourth layer 200D has a refractive index of 1.7, the fourth interface 204D has a refractive index of 1.25 and the fifth layer 200E has a refractive index of 1.6. Other values for the refractive indices could be used in other examples.

In the example of Fig. 4 red light with a first angle of incidence R1 is reflected by the first interface 204A and so remains in the first layer 200A as it travels through the light guiding member 102.

Red light with a second angle of incidence R2 is also shown in Fig. 4. The second angle of incidence is greater than the first angle. For example, the first angle of incidence could be 5° and the second angle of incidence could be 15°. Red light with a second angle of incidence R2 passes through the first interface 204A but is reflected by the second interface 204B. Red light with a second angle of incidence R2 remains in the first layer 200A and the second layer 200B as it travels through the light guiding member 102.

Green light with a first angle of incidence G1 and green light with a second angle of incidence G2 is also shown in Fig. 4. Green light with a first angle of incidence G1 passes through the first interface 204A and the second interface 204B but is reflected by the third interface 204C. Green light with a first angle of incidence G1 remains in the first layer 200A, the second layer 200B and the third layer 200C as it travels through the light guiding member 102. Green light with a second angle of incidence G2 passes through the first interface 204A, the second interface 204B and the third interface 204C but is reflected by the fourth interface 204D. Green light with a second angle of incidence G2 remains in the first layer 200A, the second layer 200B the third layer 200C and the fourth layer 200D as it travels through the light guiding member 102.

Blue light with a first angle of incidence B1 and blue light with a second angle of incidence B2 is also shown in Fig. 4. Blue light with a first angle of incidence B1 passes through the first interface 204A, the second interface 204B, and the third interface 204C but is reflected by the fourth interface 204D. Blue light with a first angle of incidence B1 remains in the first layer 200A, the second layer 200B, the third layer 200C, and the fourth layer 200D as it travels through the light guiding member 102. Blue light with a second angle of incidence B2 passes through all of the interfaces 204. Blue light with a second angle of incidence B2 therefore travels through all of the layers 200 of the light guiding member 102.

The thicknesses of all the layers 200 can be the same or there can be differences between thicknesses of the layers 200. In some examples the first layer 200A can be thicker than the other layers 200. In some examples the first layer 200A can be thicker than all of the layers 200.

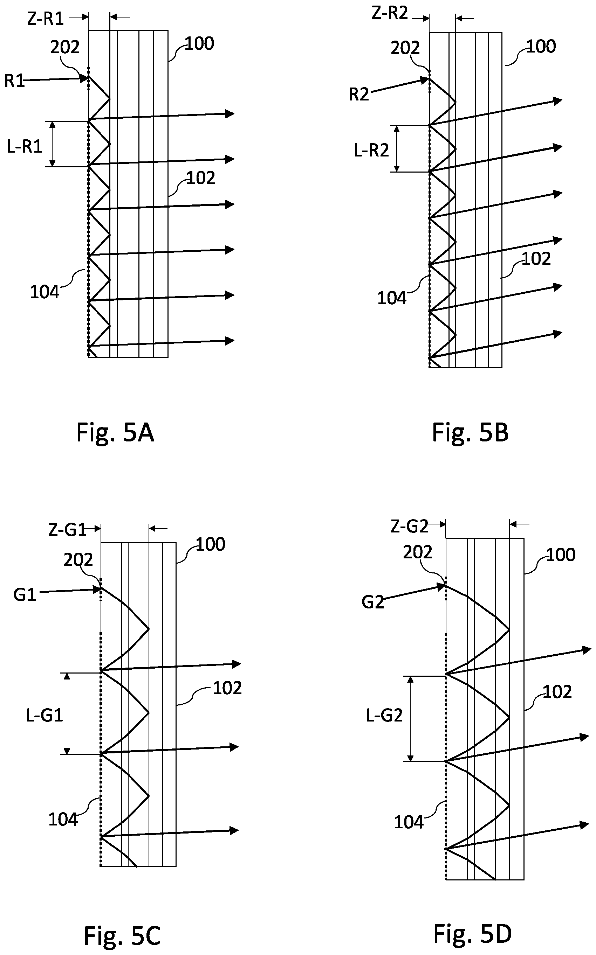

Figs. 5A to 5Fshow an apparatus 100 according to examples of the disclosure. The apparatus 100 as shown in Figs. 5A to 5F comprises a stack of layer 200 similar to those shown in Figs. 3 and 4, however different thickness of the layers 200 and different refractive indices for the layers 200 and interfaces 204 have been used. Other variations and arrangements of the apparatus 100 could be used in other examples. For instance, a different number of layers 200 and interfaces 204 could be used and different values for the refractive indices could be used.

Figs. 5A to 5F show the different paths that different wavelengths of light and different beams with different angles of incidence take through the apparatus 100. The labels of the layers 200 and the interfaces 204 are not shown in Figs. 5A to 5F for clarity.

Fig. 5A shows the path for red light with a first angle of incidence R1. This is reflected by the first interface 204A and so remains in the first layer 200A. The light guiding member 102 has an effective thickness of Z-R1 for the red light with a first angle of incidence R1. This is equal to the thickness of the first layer 200A.

The red light with a first angle of incidence R1 has a total internal reflection length of L-R1 as indicated in Fig. 5A.

Fig. 5B shows the path for red light with a second angle of incidence R2. This is reflected by the second interface 204B and so travels through the first layer 200A and the second layer 200B. The light guiding member 102 has an effective thickness of Z-R2 for the red light with a second angle of incidence R2. This is equal to the thickness of the multi-layer sub-structure comprising the first layer 200A and the second layer 200B and the first interface 204A.

The red light with a second angle of incidence R2 has a total internal reflection length of L-R2 as indicated in Fig.5B. The total internal reflection length L-R2 is similar to the total internal reflection length L-R1. This means that the light with different angles of incidence undergo a similar number of internal reflections within the light guiding member 102. This can result in good uniformity of the brightness of the out-coupled light. In other examples, good uniformity of the brightness of the out-coupled light can result from a larger difference in the total internal reflection lengths.

Fig. 5C shows the path for green light with a first angle of incidence G1. This is reflected by the third interface 204C and so travels through the first layer 200A, the second layer 200B and the third layer 200C. The light guiding member 102 has an effective thickness of Z-G1 for the first angle of incidence G1. This is equal to the thickness of the multi-layer sub-structure comprising the first layer 200A, the second layer 200B, and the third layer 200C, and the first and second interfaces 204A, 204B.

The green light with a first angle of incidence G1 has a total internal reflection length of L-G1 as indicated in Fig.5C. The total internal reflection length L-G1 is longer than the total internal reflection lengths L-R1. This means that the green light can undergo a fewer number of internal reflections within the light guiding member 102. This leads to fewer out-coupling instances for the green light compared to the red light. This compensates for the fact that the out-coupling means 104 optimized for the blue, the green, and the red light is typically more efficient in out-coupling the green light with a smaller internal reflection angle than the red light with a larger internal reflection angle.

Fig. 5D shows the path for green light with a second angle of incidence G2. This is reflected by the fourth interface 204D and so travels through the first layer 200A, the second layer 200B, the third layer 200C and the fourth layer 200D. The light guiding member 102 has an effective thickness of Z-G2 for the green light with a second angle of incidence G2. This is equal to the thickness of the multi-layer sub-structure comprising the first layer 200A, the second layer 200B, the third layer 200C, and the fourth layer 200D, and the first, second, and third interfaces 204A, 204B, 204C.

The green light with a second angle of incidence G2 has a total internal reflection length of L-G2 as indicated in Fig.5D. The total internal reflection length L-G2 is similar to the total internal reflection length L-G1. This means that the green light with different angles of incidence undergo a similar number of internal reflections within the light guiding member 102.

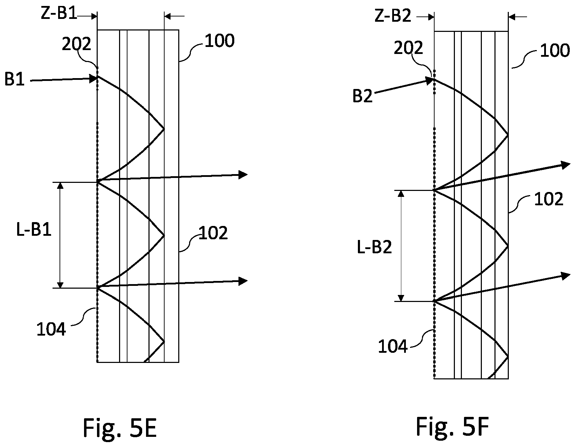

Fig. 5E shows the path for blue light with a first angle of incidence B1. This is reflected by the fourth interface 204D and so travels through the first layer 200A, the second layer 200B, the third layer 200C and the fourth layer 200D. The light guiding member 102 has an effective thickness of Z-B1 for the blue light with a first angle of incidence B1. This is equal to the thickness of the multi-layer sub-structure comprising the first layer 200A, the second layer 200B, the third layer 200C, and the fourth layer 200D and the first, second, and third interfaces 204A, 204B, 204C.

The blue light with a first angle of incidence B1 has a total internal reflection length of L-B1 as indicated in Fig.5E. The total internal reflection length L-B1 is longer than the total internal reflection lengths L-R1 and L-G1. This means that the blue light can undergo a fewer number of internal reflections within the light guiding member 102. This leads to fewer out-coupling instances for the blue light compared to the green light and the red light. This compensates for the fact that the out-coupling means 104 optimized for the blue, the green, and the red light is typically more efficient in out-coupling the blue light with a smaller internal reflection angle than the green light and the red light with larger internal reflection angles.

Fig. 5F shows the path for blue light with a second angle of incidence B2. This is passed through the fourth interface 204D and so travels through all of the layers 200A-200E. The light guiding member 102 has an effective thickness of Z-B2 for the blue light with a second angle of incidence B2. This is equal to the thickness of the multi-layer sub-structure comprising the first layer 200A, the second layer 200B, the third layer 200C, the fourth layer 200D, and the fifth layer 200E and the first, second, third, and fourth interfaces 204A, 204B, 204C, 204D.

The blue light with a second angle of incidence B2 has a total internal reflection length of L-B2 as indicated in Fig.5F. The total internal reflection length L-B2 is similar to the total internal reflection length L-B1. This means that the blue light with different angles of incidence undergo a similar number of internal reflections within the light guiding member 102.

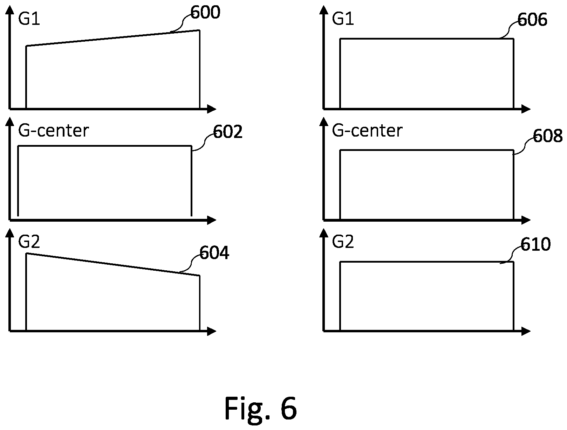

Fig. 6 shows plots of the observed brightness of respective wavelengths of light across the out-coupling diffractive means 104 for different apparatus 100.

The plots on the left-hand side show the observed brightness for the apparatus 100 of Figs. 2A to 2D where the apparatus 100 comprises three layers 200 and the same refractive index and absorption is used for all layers 200. The first plot 600 shows the output brightness for green light with a first angle of incidence G1, the second plot 602 shows the output brightness for green light with a center angle of incidence GC, and the third plot 604 shows the output brightness for green light with a second angle of incidence G2. The respective plots show that the observed brightness is uniform for the green light with a center angle of incidence GC but not for the green light with the other angles of incidence.

For the green light with a first angle of incidence G1 the brightness increases across the out-coupling diffractive means 104. For the green light with a second angle of incidence G2 the brightness decreases across the out-coupling diffractive means 104.

The plots on the right-hand side show the observed brightness for the apparatus 100 of Figs 5A to 5F. The fourth plot 606 shows the output brightness for green light with a first angle of incidence G1, the fifth plot 608 shows the output brightness for green light with a center angle of incidence GC, and the sixth plot 606 shows the output brightness for green light with a second angle of incidence G2. The respective plots show that the observed brightness is uniform for the different angles of incidence This therefore provides improved colour in the output.

Any suitable materials can be used for the respective components of the apparatus 100. The thin film material that are used in the interfaces 204 can be selected to provide a refractive index that is low enough to support total internal reflection for operational wavelength band and field of view angles.

The thickness of the thin film material needs to be substantially larger than the wavelength of the light to reduce any light leakage through frustrated total internal reflection.

In addition, the thin film material used for the interface 204 should allow shorter wavelength bands of interest, such as green and blue for the first interface, to pass through without substantial total internal reflection overlap.

These requirements can be used to select the refractive indexes and thickness of the layers for the desired optical function.

The thin film materials need to be chemically compatible with the surrounding materials. For example, adhesion properties between the thin film materials and adjacent layers 200 should be strong enough so that the layers 200 will not delaminate over the operating conditions.

The material used for the layers 200 have to provide for total internal reflection. In addition to this the materials for the layers 200 can be selected so that they will not cause substantial optical absorption or scattering for the light of the wavelengths of interest. In addition to this the materials used for the layers 200 can be selected to provide good mechanical strength.

The apparatus 100 can be used as an exit pupil expander comprising an in-coupling diffractive means 202 configured to in-couple input beams of light and an out-coupling diffractive means 104 configured to expand and out-couple the expanded beams of light. The apparatus 100 may also comprise other diffractive means, such as an expanding diffractive means for expanding the exit pupil of the light beams before passing the light beams towards the out-coupling diffractive means 104, where the exit pupil of the light beams is expanded in a second direction and the beams of light are out-coupled. The efficiency of the expander diffractive means can be modulated in a similar manner as the out-coupling diffractive means 104.

In some examples the apparatus 100 can comprise a one-dimensional exit pupil expander without the expanding diffractive means and can make use of external optical solutions or slanted mirror surfaces (or prisms) inside the light guide. Beam expansion with refractive optics is possible.

In some examples the apparatus 100 could comprise a stack of multiple light guiding members 102, or partially overlapping light guiding members, or adjacent light guiding members for multiplexing colours, focal distance, field of view, exit pupil, or some other features.

The out-coupled beams can form a virtual image focused to infinity (using a planar light guiding member), or to a finite distance (using e.g., a spherical light guiding member) or the out-coupled beams can be optically distorted to counter the reflection on a curved combiner element (such as a windshield), or have multiple focal planes (using, for example, a stack of spherical light guiding members).

Glare or stray light may be caused by reflections on different surfaces, unwanted diffractions (for example., of higher order) on the diffraction gratings, or some other comparable causes. Means for reducing such effects could be used. Examples include but are not limited to glare shields, anti-reflection coatings of different surfaces, and special diffraction grating solutions.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising:
a light guiding member comprising a stack of layers and multiple interfaces between respective layers, wherein the respective layers are arranged to enable light to be guided through the light guiding member via internal reflections;
in-coupling diffractive means configured to in-couple one or more input beams of light into the first layer of the light guiding member;
out-coupling diffractive means configured to out-couple the one or more beams of light from the light guiding member wherein the in-coupling diffractive means and the out-coupling diffractive means are provided on the first layer of the light guiding member; and
wherein the light guiding member comprises more than three layers and the refractive index of at least one of; the respective layers or the respective interfaces, decreases from the first layer through the stack of layers.

2. An apparatus as claimed in claim 1 wherein the refractive index of the at least one of; the respective layers or the respective interfaces, decreases gradually from the first layer through the stack of layers.

3. An apparatus as claimed in any preceding claim wherein the decrements of the refractive indices are determined, at least in part, by a number of layers and interfaces in the light guiding member.

4. An apparatus as claimed in any preceding claim wherein the layers and interfaces are configured so that light having a first wavelength and having a first angle of incidence travels through a first layer and light having the first wavelength and a second angle of incidence travels through a second layer.

5. An apparatus as claimed in any preceding claim wherein the light guiding member comprises five layers and four interfaces.

6. An apparatus as claimed in any preceding claim wherein a thin film material is provided at the interfaces.

7. An apparatus as claimed in claim 6 wherein the interfaces comprise a thin film and the thin film material is different for different interfaces.

8. An apparatus as claimed in any preceding claim wherein different materials are used for different layers of the stack.

9. An apparatus as claimed in any preceding claim wherein different layers in the stack have different thicknesses.

10. An apparatus as claimed in any preceding claim wherein the first layer is thicker than other layers in the stack.

11. An apparatus as claimed in any preceding claim wherein the light guiding member is substantially planar.

12. An apparatus as claimed in any preceding claim wherein the interfaces between respective layers of the light guiding member are substantially planar.

13. A module, a device, a headset, a vehicle or cab for a vehicle comprising an apparatus as claimed in any preceding claim.
